# EUROPEAN PATENT SPECIFICATION

(11) **EP 4 331 291 B1**
(45) Date of publication and mention of the grant of the patent: **29.07.2026**
(21) Application number: 22723319.4
(22) Date of filing: 29.04.2022
(51) Int. Cl.: H04W 60/04, H04W 48/06, H04W 48/18

(54) **MANAGING NETWORK RESELECTION FOR A HIGH NUMBER OF USERS**
VERWALTUNG DER NETZWERKNEUAUSWAHL FÜR EINE GROSSE ANZAHL VON BENUTZERN
GESTION DE RESÉLECTION DE RÉSEAU POUR UN GRAND NOMBRE D'UTILISATEURS

(30) Priority: 29.04.2021 EP 21171267; 22.11.2021 EP 21209452; 25.03.2022 EP 22164557
(43) Date of publication of application: 06.03.2024
(73) Proprietor: InterDigital Patent Holdings, Inc., Wilmington, DE 19809 (US)
(72) Inventor: COGALAN, Tezcan, London EC2A 3QR (GB); SETHI, Ahuj, Montreal, Québec H3A 3G4 (CA); MOURAD, Alain, London EC2A 3QR (GB); AHMAD, Saad, Montreal, Québec H3A 3G4 (CA); OLVERA-HERNANDEZ, Ulises, Montreal, Québec H3A 3G4 (CA)
(74) Representative: Interdigital
(86) International application number: PCT/US2022/026904
(87) International publication number: WO 2022/232491

(56) References cited:
- US-A1- 2020 404 734
- US-A1- 2021 029 628

## Description

### TECHNICAL FIELD

The present disclosure is generally directed to the fields of communications, software and encoding, including, for example, to methods, architectures, apparatuses, systems directed to managing network reselection for a high number of users.

### BACKGROUND

US 2020/0404734 A1 describes a solution in which, when a mobile device requests registration with a network, the network, in case it is congested, responds by rejecting the request and provides a back-off timer so that the mobile device can send a new request when the timer has lapsed. A problem with the solution is that it can create serial congestion in case there are a large number of devices that sends and resends requests at essentially the same time.

US 2021/029628 A1 describes access control by use of reject messages including a backoff timer in association with Network Slice Selection Assistance Information.

### SUMMARY

The present invention relates to methods and apparatuses directed to managing network registration congestion according to the appended claims.

### BRIEF DESCRIPTION OF THE DRAWINGS

A more detailed understanding may be had from the detailed description below, given by way of example in conjunction with drawings appended hereto. Figures in such drawings, like the detailed description, are examples. As such, the Figures (FIGs.) and the detailed description are not to be considered limiting, and other equally effective examples are possible and likely. Furthermore, like reference numerals ("ref.") in the FIGs. indicate like elements, and wherein:
FIG. 1A is a system diagram illustrating an example communications system;
FIG. 1B is a system diagram illustrating an example wireless transmit/receive unit (WTRU) that may be used within the communications system illustrated in FIG. 1A;
FIG. 1C is a system diagram illustrating an example radio access network (RAN) and an example core network (CN) that may be used within the communications system illustrated in FIG. 1A;
FIG. 1D is a system diagram illustrating a further example RAN and a further example CN that may be used within the communications system illustrated in FIG. 1A;
FIGS. 2A-2D schematically illustrate an example of different states of access to event-based local services;
FIG. 3 is a message flow diagram illustrating the "hosting network-specific re-registration" registration type information for the three described IE options according to an embodiment of the present principles;
FIG. 4 is a flow chart illustrating a method of configuring a search timer value according to an embodiment of the present principles;
FIG. 5 illustrates a method of LHN-based flexible back-off timer value range assignment according to an embodiment of the present principles;
FIG. 6 is a signal flow diagram illustrating registration request processing according to an embodiment of the present principles;
FIG. 7 is a flow chart of a method of configuring SOR timer value Tsor-cm for users accessing LHN services according to an embodiment of the present principles;
FIG. 8 illustrates a signal flow diagram of a method of SOR-AF based network re-selection according to an embodiment of the present principles; and
FIG. 9 illustrates a signal flow diagram of a method of network re-selection according to an embodiment of the present principles.

### DETAILED DESCRIPTION

In the following detailed description, numerous specific details are set forth to provide a thorough understanding of embodiments and/or examples disclosed herein. However, it will be understood that such embodiments and examples may be practiced without some or all of the specific details set forth herein. In other instances, well-known methods, procedures, components and circuits have not been described in detail, so as not to obscure the following description.

### Example Communications System

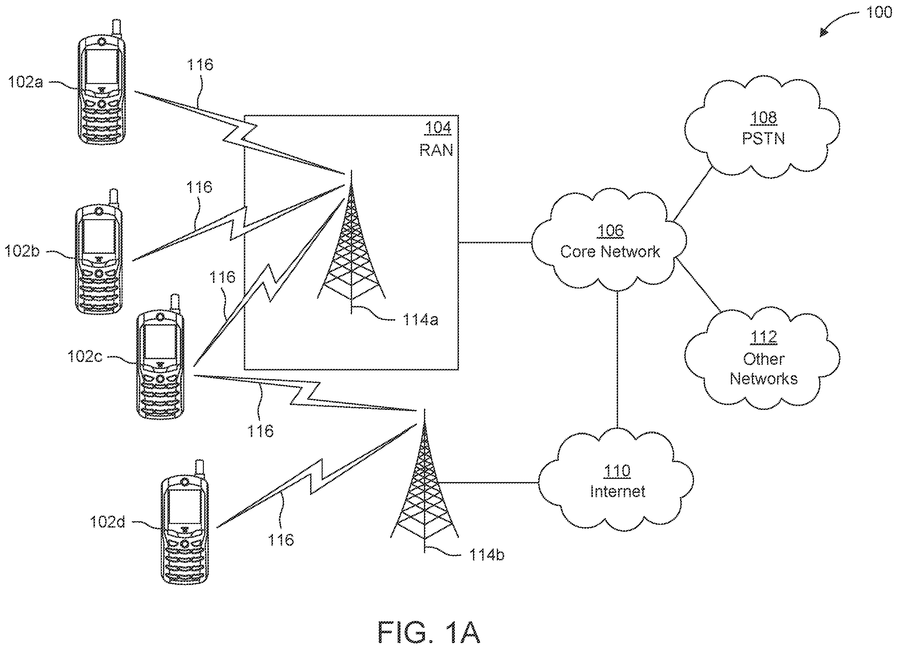

The methods, apparatuses and systems provided herein are well-suited for communications involving both wired and wireless networks. An overview of various types of wireless devices and infrastructure is provided with respect to FIGs. 1A-1D, where various elements of the network may utilize, perform, be arranged in accordance with and/or be adapted and/or configured for the methods, apparatuses and systems provided herein.

FIG. 1A is a system diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail (ZT) unique-word (UW) discreet Fourier transform (DFT) spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a radio access network (RAN) 104/113, a core network (CN) 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include (or be) a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d, e.g., to facilitate access to one or more communication networks, such as the CN 106/115, the Internet 110, and/or the networks 112. By way of example, the base stations 114a, 114b may be any of a base transceiver station (BTS), a Node-B (NB), an eNode-B (eNB), a Home Node-B (HNB), a Home eNode-B (HeNB), a gNode-B (gNB), a NR Node-B (NR NB), a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in an embodiment, the base station 114a may include three transceivers, i.e., one for each sector of the cell. In an embodiment, the base station 114a may employ multiple-input multiple output (MIMO) technology and may utilize multiple transceivers for each or any sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access, which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In an embodiment, the base station 114a and the WTRUs 102a, 102b, 102c may implement radio technologies such as IEEE 802.11 (i.e., Wireless Fidelity (Wi-Fi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node-B, Home eNode-B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In an embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In an embodiment, the base station 114b and the WTRUs 102c, 102d may utilize a cellular-based RAT (e.g., WCDMA, CDMA2000, GSM, LTE, LTE-A, LTE-A Pro, NR, etc.) to establish any of a small cell, picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing an NR radio technology, the CN 106/115 may also be in communication with another RAN (not shown) employing any of a GSM, UMTS, CDMA 2000, WiMAX, E-UTRA, or Wi-Fi radio technology.

The CN 106/115 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/114 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

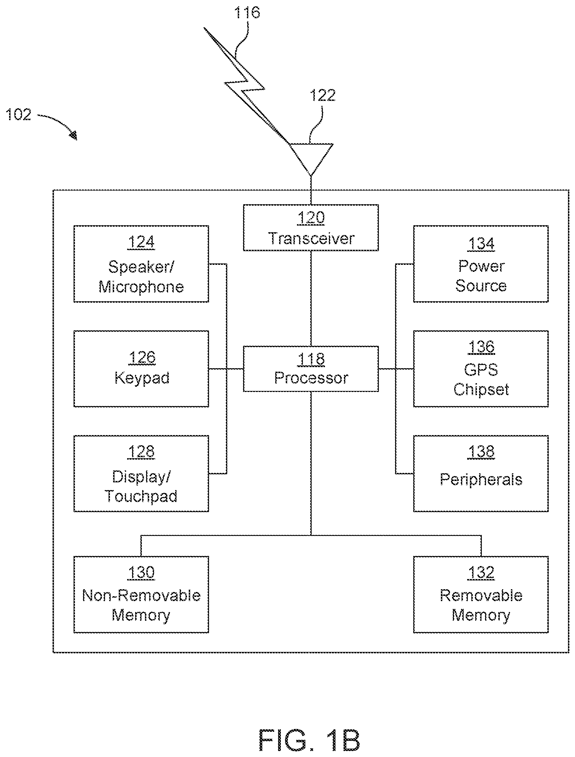

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other elements/peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together, e.g., in an electronic package or chip.

The transmit/receive element 122 may be configured to transmit signals to, or receive signals from, a base station (e.g., the base station 114a) over the air interface 116. For example, in an embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In an embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. For example, the WTRU 102 may employ MIMO technology. Thus, in an embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other elements/peripherals 138, which may include one or more software and/or hardware modules/units that provide additional features, functionality and/or wired or wireless connectivity. For example, the elements/peripherals 138 may include an accelerometer, an e-compass, a satellite transceiver, a digital camera (e.g., for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a virtual reality and/or augmented reality (VR/AR) device, an activity tracker, and the like. The elements/peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the uplink (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WTRU 102 may include a half-duplex radio for which transmission and reception of some or all of the signals (e.g., associated with particular subframes for either the uplink (e.g., for transmission) or the downlink (e.g., for reception)).

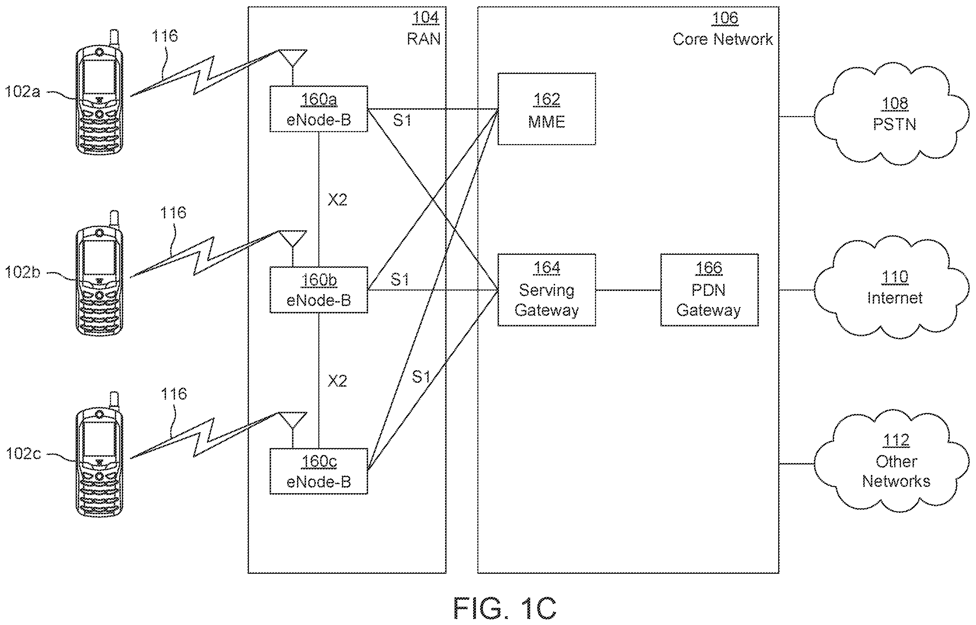

FIG. 1C is a system diagram illustrating the RAN 104 and the CN 106 according to an embodiment. As noted above, the RAN 104 may employ an E-UTRA radio technology to communicate with the WTRUs 102a, 102b, and 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In an embodiment, the eNode-Bs 160a, 160b, 160c may implement MIMO technology. Thus, the eNode-B 160a, for example, may use multiple antennas to transmit wireless signals to, and receive wireless signals from, the WTRU 102a.

Each of the eNode-Bs 160a, 160b, and 160c may be associated with a particular cell (not shown) and may be configured to handle radio resource management decisions, handover decisions, scheduling of users in the uplink (UL) and/or downlink (DL), and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (PGW) 166. While each of the foregoing elements are depicted as part of the CN 106, it will be appreciated that any one of these elements may be owned and/or operated by an entity other than the CN operator.

The MME 162 may be connected to each of the eNode-Bs 160a, 160b, and 160c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode-Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode-B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGs. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in infrastructure basic service set (BSS) mode may have an access point (AP) for the BSS and one or more stations (STAs) associated with the AP. The AP may have an access or an interface to a distribution system (DS) or another type of wired/wireless network that carries traffic into and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier sense multiple access with collision avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High throughput (HT) STAs may use a 40 MHz wide channel for communication, for example, via a combination of the primary 20 MHz channel with an adjacent or nonadjacent 20 MHz channel to form a 40 MHz wide channel.

Very high throughput (VHT) STAs may support 20 MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse fast fourier transform (IFFT) processing, and time domain processing, may be done on each stream separately. The streams may be mapped on to the two 80 MHz channels, and the data may be transmitted by a transmitting STA. At the receiver of the receiving STA, the above-described operation for the 80+80 configuration may be reversed, and the combined data may be sent to a medium access control (MAC) layer, entity, etc.

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV white space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support meter type control/machine-type communications (MTC), such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.1 1ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or network allocation vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

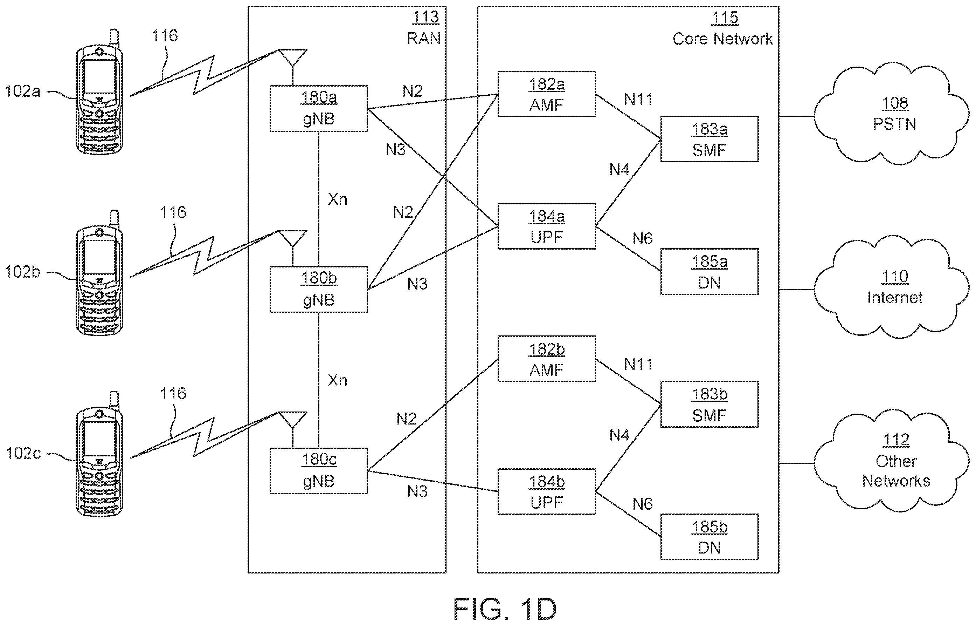

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In an embodiment, the gNBs 180a, 180b, 180c may implement MIMO technology. For example, gNBs 180a, 180b may utilize beamforming to transmit signals to and/or receive signals from the WTRUs 102a, 102b, 102c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., including a varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards user plane functions (UPFs) 184a, 184b, routing of control plane information towards access and mobility management functions (AMFs) 182a, 182b, and the like. As shown in FIG. 1D, the gNBs 180a, 180b, 180c may communicate with one another over an Xn interface.

The CN 115 shown in FIG. 1D may include at least one AMF 182a, 182b, at least one UPF 184a, 184b, at least one session management function (SMF) 183a, 183b, and at least one Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different protocol data unit (PDU) sessions with different requirements), selecting a particular SMF 183a, 183b, management of the registration area, termination of NAS signaling, mobility management, and the like. Network slicing may be used by the AMF 182a, 182b, e.g., to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for MTC access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as Wi-Fi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, e.g., to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In an embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of FIGs. 1A-1D, and the corresponding description of FIGs. 1A-1D, one or more, or all, of the functions described herein with regard to any of: WTRUs 102a-d, base stations 114a-b, eNode-Bs 160a-c, MME 162, SGW 164, PGW 166, gNBs 180a-c, AMFs 182a-b, UPFs 184a-b, SMFs 183a-b, DNs 185a-b, and/or any other element(s)/device(s) described herein, may be performed by one or more emulation elements/devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

### Introduction

Venues such as stadiums, shopping malls, airports, train/tube stations, museums, amusement parks, etc. may need a dedicated network infrastructure to address specific requirements in terms of capacity, latency, reliability. Such a network infrastructure can be deployed by traditional mobile network operators (MNOs), also known as public land mobile network (PLMN) or venue owners in the form of a private network that can be totally separated from the MNO's network, e.g., a stand-alone non-public network (SNPN), or partly integrated with the public network, e.g., a public network integrated non-public network (PNI-NPN).

Various 5G services may be provided not only by PLMNs but also by the venue-dedicated networks or 3rd party service providers. These services can be on-demand, temporary and/or cover specific location(s); access to these services is local and may be bounded in time and space. For example, during a live sports game, a hosting network can provide virtual reality (VR) or augmented reality (AR) services to spectators while another hosting network can provide high-resolution video service.

In conventional mobile networks, PLMNs have service level agreements (SLAs) with other PLMNs to provide temporary access and services for each other's users. In general, these SLAs are long-term agreements. However, since the hosting network providing the local services may be a temporary network, the PLMN may therefore not have a long-term pre-agreement with this temporary local hosting network (LHN). A short-term business relationship between the PLMN and the temporary LHN is being considered in 3GPP TR 22.844 "Study on 5G Networks Providing Access to Localized Services" (S1-210315) with the aim to guarantee simple, efficient and effortless transition of users from the PLMN to the temporary LHN. With this short-term agreement, PLMN subscribers can be configured and provisioned to use local services based on their network policies for authentication, routing and charging.

As the local services provided by the LHN typically are event-based, temporary and confined in a specific environment, it can be expected that once the PLMN users have accessed and enjoyed the local services, they will terminate the local services and return back to their home network. Continuing the previous example, during the live sports game, spectators who accessed and enjoyed VR/AR or high-resolution video service during the game, typically no longer need to use the service once the game has finished. It can be expected that when the game has finished, a high number of users (capacity of stadiums may be tens of thousands) will terminate their access/service with the LHN and request a registration back to their home PLMN.

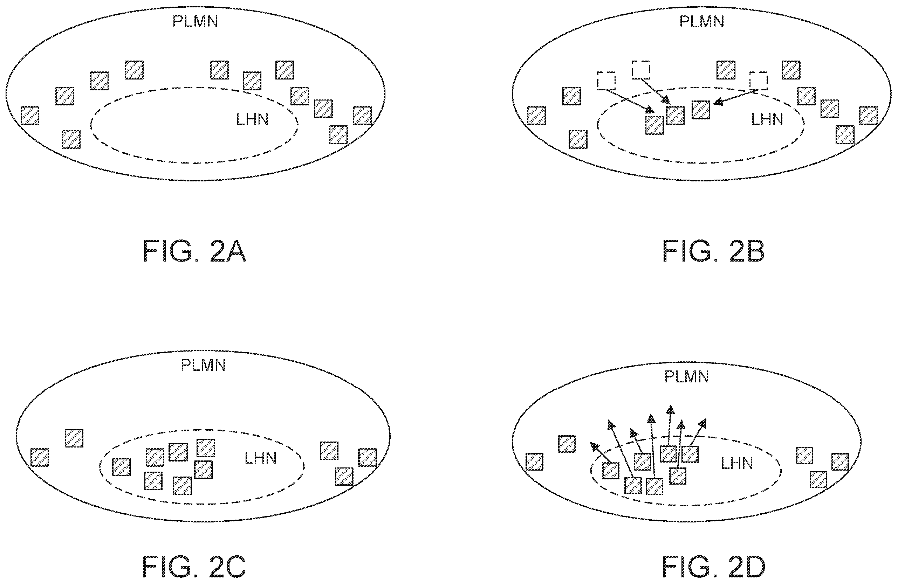

FIGS. 2A-2D schematically illustrate an example of different states of access to event-based local services. In the figures, user devices (UEs) are illustrated by black squares. FIG. 2A illustrates the situation before the event: local services are not activated, and the user devices are connected to the PLMN. FIG. 2B illustrates the situation when local services are activated and PLMN users have started to access the local services (illustrated by user devices moving, illustrated by arrows, from their previous position in the PLMN, illustrated by white boxes, to the LHN. FIG. 2C illustrates the situation during the event with many users in the LHN and some users still in the PLMN. FIG. 2D illustrates the situation after the event when users terminate the access to the local services provided by the LHN and are requesting registration attempts back to their PLMN (illustrated by arrows) within a relatively short time span.

Therefore, mechanisms are needed to manage the return of UEs from the LHN to their home PLMN by spreading out the registration attempts over time and limiting the number of UEs attempting to register simultaneously. Otherwise, a high number of users are likely to receive registration reject messages with various reject causes such as congestion or abnormal cases as described in GPP TS 24.501 "Non-Access-Stratum (NAS) protocol for 5G System (5GS)," which is likely to lead to longer time scales for users to register back to their home PLMN.
A similar problem has also been defined in 3GPP study item named minimization of service interruption (CT-MINT) 3GPP TR 24.811 "Study on the support for minimization of service interruption" that focusses on "Disaster Conditions" where a first PLMN cannot serve its subscribers due to being affected by a disaster condition, and a second, un-affected, PLMN serves the subscribers of the first PLMN. Once the disaster condition is no longer applicable, subscribers that are in roaming due to the disaster condition will perform PLMN re-selection to return to their home PLMN. As different messages/information elements are proposed in the study item to indicate disaster condition to UEs and other PLMNs as well as to manage such an occasional condition with special care, the methods/mechanisms proposed therein cannot be applied to the scenario where users access local services temporarily, on-demand.

### Overview

The present principles consider a non-limitative scenario where a LHN is deployed in a venue by either a private venue owner as an SNPN or a PLMN operator (PLMN A) to provide local services during special events in the venue. These local services are typically temporary (provided only during the event and not regularly available) and available only within the venue. Any other PLMN (PLMN B) can come to a long-term agreement with PLMN A or a short-term agreement with the SNPN before or during the event. Based on this agreement, PLMN B can advertise (i.e., promote) the local services provided by the LHN to its subscribers that are in proximity of the venue via conventional channels such as SMS, PLMN B's application notification, etc. Users of PLMN B that received details of the advertised local services may be interested in one or more of the advertised services and can request a temporary subscription/credentials from PLMN B to access the LHN (PLMN A or SNPN) to enjoy the service(s).

Without loss of generality, the present description assumes that there exists a network exposure framework from the LHN to PLMN B in order to provide details of the event that takes place in the venue; see for example 3GPP TR 22.844, already identified. Details of the event can include the event duration, expected local service expiry time, etc. This can be considered as a service description for the local service, and any change on the local service status can be updated via the network exposure framework.

The present principles provide solutions for PLMN B to organize itself for possible congestion occurrences that may happen once the users of PLMN B that have accessed the hosting network, enjoyed the local service provided by the hosting network, terminated the service (e.g., once the event has finished) and attempted a re-selection/re-registering process to PLMN B.

The solutions introduce a hosting network-specific timer to be used to trigger network re-selection process for the users of PLMN B that have terminated the local service. As it typically is not possible to know/predict precisely how many users will be connected to the LHN and whether these users will remain connected during the event, any configuration done before the user leaves PLMN B to access the hosting network may not optimize the network re-selection process. Instead, it may cause unnecessary waiting in case of no congestion.

To this end, two different mechanisms are proposed to make use of the new hosting network-specific timer. The first mechanism introduces a new 5GS registration type and a new reject cause along with the hosting network-specific timer, whereas the second mechanism makes use of the conventional steering of roaming (SOR) procedure. Accordingly, the proposed solutions are grouped into two main embodiments as a registration type-based embodiment and a SOR-based embodiment.

### 5GS re-registration information-based network re-selection from a hosting network to a PLMN

### Hosting network-specific re-registration information

5GS registration type information element (IE) is used to indicate the type of the requested registration. Currently, four registration types are defined: initial registration, mobility registration updating, periodic registration updating and emergency registration.

As the naming implies, initial registration is used to attempt registration to a new PLMN or SNPN, whereas mobility update is used to notify the already registered network upon mobility or to update its capabilities/parameters. The periodic registration is used to notify the already registered network but it can also be used to look for higher priority PLMNs.

Therefore, for a LHN to PLMN network re-selection, initial registration, mobility registration and/or periodic registration should be triggered. The registration procedure is based on expiry of timer T3502, T3511, T3512 or T3346.

In the embodiment of the present principles, a new registration type, "hosting network-specific re-registration," is used to indicate that the UE was temporarily connected to a LHN and requests re-registration to its home PLMN. The "hosting network-specific re-registration" information can be signaled to the 5G network as (a) a 5GS registration type IE; (b) a 5GS update type IE; or (c) a new IE such as "5GS local network access indication" in the registration request message.

The 5GS update type IE is used to allow the UE to provide additional information to the network when performing a registration procedure. Therefore, when the proposed new information is signaled as a 5GS update type IE, this information indicates to the network that a registration request message is sent by a UE that has temporarily accessed to a LHN for localized services. Accordingly, when a UE registers to a LHN, UE modifies the relevant IE (5GS registration request, 5GS update type or 5GS local network access indication). Then, UE uses the updated IE when sending a registration request message back to its home PLMN.

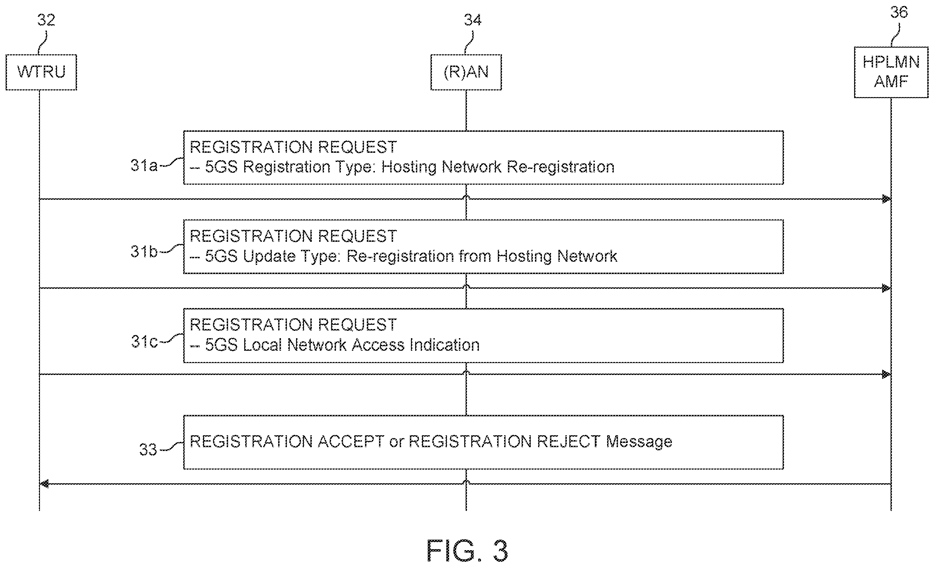

FIG. 3 is a message flow diagram illustrating the "hosting network-specific re-registration" registration type information for the three described IE options according to an embodiment of the present principles. How the AMF reacts after reception of the registration request message will be described later.

The UE 32 sends a registration request 31a, 31b, 31c through the (R)AN 34 to the AMF 36 in the home PLMN that, after having processed the registration request, returns a registration response 33 that can be a registration accept message or a registration reject message.

As already described, the registration request indicates that the UE has temporarily accessed local service(s) provided by a LHN. To this end, the registration request can include a 5GS registration type IE chosen as "hosting network-specific re-registration" 31a, a 5GS update type IE chosen as "re-registration from hosting network" 31b, or a new IE 31c such as "5GS local network access indication," for example set to 1, to be further described.

### Periodic search timer value configuration

When the local services are provided by another PLMN that is different from the user's home PLMN, such a LHN can be considered as a visiting PLMN. For the users accessing a visiting PLMN, there is a timer value T for which the EF_{HPPLMN} elementary file may be stored in the SIM and that is used to trigger periodic attempts for a UE to obtain services from its home PLMN (or higher priority PLMN); see for example 3GPP TS 23.122 "Non-Access-Stratum (NAS) functions related to Mobile Station (MS) in idle mode". The timer value T is interpreted depending on the access technology in use and if the UE is not using EC-GSM-IoT, Category M1 or Category NB1, it is either in the range from 6 minutes to 8 hours with 6 minutes steps or it indicates that no periodic attempts shall be made. In case the SIM stores no value for T, a default value of 60 minutes is used. In case of accessing local services, service details can be provided via network exposure framework as detailed in 3GPP TS 24.501 "Non-Access-Stratum (NAS) protocol for 5G System (5GS)". The service details are provided before the home PLMN advertises the service to its subscribers. Hence, the details on the service duration are made available to the home PLMN of the UEs before they request access to the LHN. Therefore, in the embodiment of the present principles, the home PLMN configures a minimum periodic search timer value T to its users who requested access to the LHN. This search timer value can be configured as will be described.

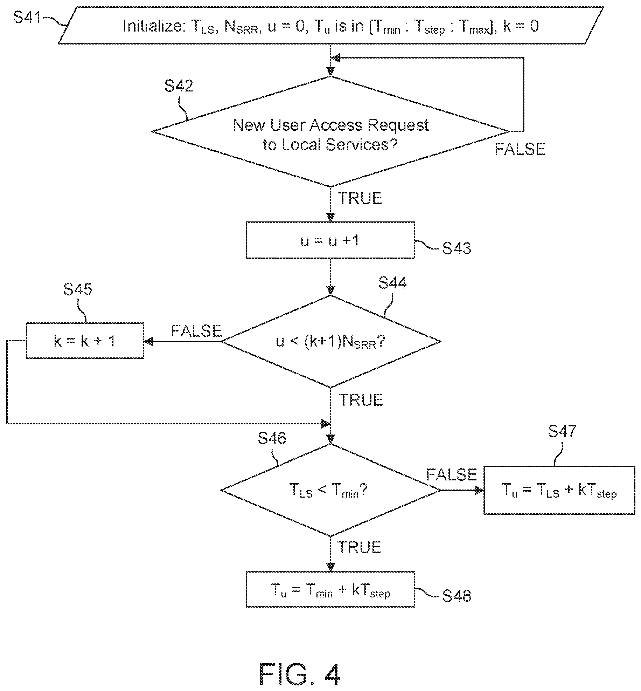

FIG. 4 is a flow chart illustrating a method of configuring a search timer value according to an embodiment of the present principles.

In step S41, the PLMN initializes the algorithm with (i) the capabilities of the home PLMN to handle simultaneous registration requests at the same time, the first NSRR number of users (determined based on the time that a user requested access to the hosting network in ascending order); (ii) the local service duration ***T***_{LS} that is provided by the LHN to PLMN; (iii) the index ***u*** for users who request access to the local service(s); (iv) the minimum periodic search timer value that is in the range from ***T***ₘᵢₙ to ***T***ₘₐₓ by ***T***ₛₜₑₚ steps; and (v) the batch of users index ***k*.**

In step S42, it is determined if a new user requests access to the local service(s) provided by LHN. Step S42 is iterated until the condition is true; the PLMN starts the periodic search timer value assignment for the user, ***T***ᵤ.

In step S43, the user index ***u*** is increased by 1.

In step S44, it is checked whether the new user ***u*** belongs to the ***k***^{th} batch of users.

If the new user ***u*** does not belong to the ***k***^{th} batch, i.e., FALSE, in step S45, the batch index ***k*** is increased by 1.

In step S46, it is checked whether the duration of the requested local service ***T***_{LS} is shorter than the minimum value of the range of the minimum periodic timer value ***T***ₘᵢₙ**.**

If the duration of the requested local service ***T***_{LS} is longer than Tmin, i.e., FALSE, in step S47, the higher priority PLMN search period EF_{HPPLMN} value specified in 3GPP TS 31.102 "Characteristics of the Universal Subscriber Identity Module (USIM) application" is overwritten by the given equation, *Tᵤ = T_{LS} + kTₛₜₑₚ, **k, T***ₛₜₑₚ and the local service duration ***T***_{LS}.

If the duration of the requested local service ***T***_{LS} is shorter than Tmin, i.e., TRUE, in step S48, the higher priority PLMN search period EF_{HPPLMN} value specified in 3GPP TS 31.102 is overwritten by the given equation, *Tᵤ = Tₘᵢₙ + kTₛₜₑₚ, **k**,* size ***T***ₛₜₑₚ and the minimum range value ***T***ₘᵢₙ.

### 5GMM reject cause and associated timer value

In the current specification 3GPP TS 24.501 (already mentioned), when a PLMN cannot accept a registration request due to congestion, the PLMN rejects the registration request with 5GMM cause value #22 (congestion) and assigns a value for back-off timer T3346. The PLMN assigns any value from 2 seconds to 320 hours to the back-off timer T3346; see 3GPP TS 24.008 "Mobile radio interface Layer 3 specification".

However, as a LHN for localized services can be a temporary network and provide service for a limited time, the range of a back-off timer value may vary for different LHNs. The embodiment relies on the hosting network-specific re-registration information (already described) that can be provided by the UE to the home PLMN via 5GS registration type IE, 5GS update type IE or proposed 5GS local network access indication IE. Once the home PLMN receives simultaneous registration requests with the hosting network-specific re-registration information from a high number of UEs and cannot accept all the registration requests due to congestion, according to this embodiment the home PLMN rejects the registration requests with a new 5GMM cause value #XX (congestion-re-registration from hosting network) and assigns a value for a new back-off timer value TXXXX.

Assigning random values for the new back-off timer from a pre-defined range that is the same for all hosting networks may lead to unnecessary waiting times as the number of users that are temporarily accessed to a LHN varies between venues/events/LHNs. Aiming to reduce the waiting time for the returning UEs, the embodiment uses a LHN-based flexible back-off timer value range assignment.

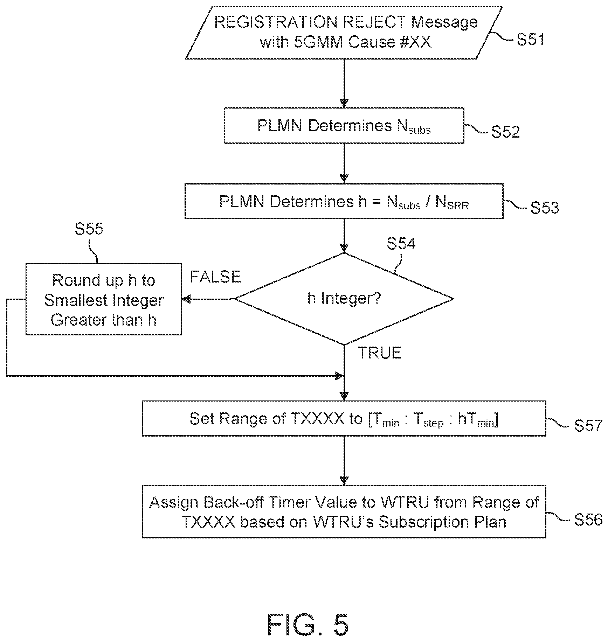

FIG. 5 illustrates a method of LHN-based flexible back-off timer value range assignment according to an embodiment of the present principles.

The home PLMN receives a registration request message with "hosting network-specific re-registration" information and in step S51 send a REGISTRATION REJECT message with 5GMM cause #XX (congestion-re-registration from hosting network), as already described.

In step S52, the home PLMN determines the number of its subscriber in close proximity to the hosting network (***N***_{subs}). Alternatively, the home PLMN may begin to determine the number of its subscriber in close proximity to the hosting network (***N***_{subs}) after receiving the registration request message with "hosting network-specific re-registration" information. In another word, the determination of sending a REGISTRATION REJECT message in step S51 may be skipped.

In step S53, the home PLMN determines an integer value ***h*** that represents the number of iterations to accept registration requests of all UEs in close proximity by dividing ***N***_{subs} by its capability to handle simultaneous registration requests NSRR.

In step S54, it is checked whether ***h*** is an integer or not.

If the value of ***h*** is not an integer, i.e., FALSE, in step S55, ***h*** is assigned a value resulting from a ceiling operation that rounds up the division result to the smallest integer greater than the division result, i.e., the next higher integer.

In step S56, the range of the back-off timer value TXXXX is set to ***T***ₘᵢₙ to ***h*******T***ₘᵢₙ with a step size of ***T***ₛₜₑₚ , where ***T***ₘᵢₙ and ***T***ₛₜₑₚ can be configured by the network.

Once the range of the back-off timer value TXXXX is determined, in step S57, the home PLMN selects a value from this range and assigns it to UEs attempting registration from the hosting network based on their subscription plan. Accordingly, a UE with a premium subscription plan may be allocated a lower value compared to UEs with other subscription plans.

Although in the example of FIG. 5, the maximum value of the range for the back-off timer value is determined through dividing the number of home PLMN's subscriber in close proximity to the hosting network *N*_{subs} by the home PLMN's capability to handle simultaneous registration requests NSRR, it should be understand that the home PLMN may adopt other methods for calculating the maximum value of the range for the back-off timer from the number of its subscriber in close proximity to the hosting network ***N***_{subs} and its capability to handle simultaneous registration requests *N*_{SRR}.

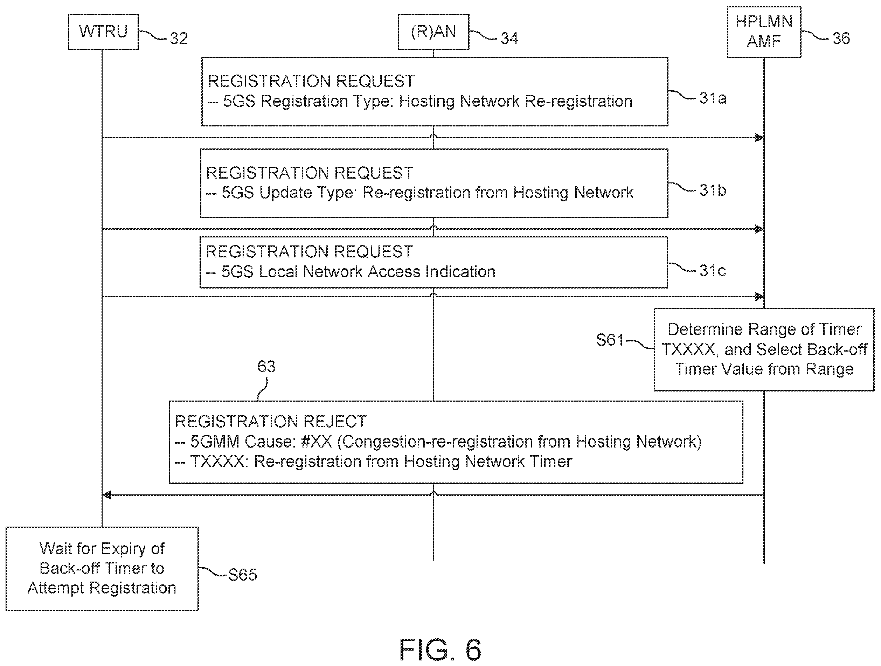

FIG. 6 is a signal flow chart illustrating registration request processing according to an embodiment of the present principles.

The UE 32 sends a registration request message 31a, 31b or 31c via (R)AN 34 to the HPLMN AMF 36 as already described with reference to FIG. 3.

In case the Home PLMN 36 accepts the UE 32, it sends a registration accept message, as already described; this is not illustrated in FIG. 6.

However, in case of congestion due to a high number of users sending registration request messages to their home PLMN and the home PLMN unable to handle these essentially simultaneous registration requests, in step S61, the AMF 36 determines the range of the back-off timer value TXXXX and assigns a value to UE as described in FIG. 5.

Then, the AMF 36 sends to the UE 32 a registration reject message 63 including 2c, the 5GMM cause #XX (congestion-re-registration from hosting network) and its associated timer value TXXXX already described.

After reception of the registration reject message 62, in step S65, the UE sets a timer to the back-off timer value and waits until the timer expires, after which the UE 32 can send another registration request message 31a, 31b or 31c, already described.

### SOR-based solution to trigger network re-selection from a local hosting network to PLMN

In this second embodiment, it is assumed that the hosting network, the LHN, is a PLMN (visiting PLMN) that is different than the UE's home PLMN. The reason for the assumption can be explained by the capabilities of the conventional SOR framework. Based on the details given in Annex C.2 in 3GPP TS 24.501, UEs operating in SNPN access mode do not store a SOR-associated counter in their non-volatile memory. Therefore, SOR does not apply to an SNPN.

In case SOR is adapted for use with an SNPN, the second embodiment is also applicable on cases where the LHN is deployed as an SNPN.

### SOR-AF (Application Function) to send SOR commands in a specific order

The second embodiment further relies on the assumption that a network exposure framework from the LHN to the home PLMN of users who requested access to the LHN exists in order to provide details of the event that takes place in the venue; see for example 3GPP TR 22.844. The embodiment uses the information provided by the LHN regarding its services or event in order to determine when to send SOR commands to a UE or a group of UEs that are being served by the LHN. The embodiment also relies on the availability of data analytics solutions in the LHN to predict the local service performance and possible service interruption that can lead the local service roaming UEs to return their home PLMN.

When the UEs accessed the LHN, SOR information to the UEs can be provided by the home PLMN of the UEs during and after registration. This is a mandatory procedure for a visiting PLMN (LHN) to transparently forward the SOR information received from the home PLMN to the UEs roaming to access local services. The second embodiment follows steps similar to those provided to determine the periodic search timer value described for the first embodiment, a difference being is that instead of configuring the periodic search timer value T during the initial registration, a SOR timer value (Tsor-cm) is updated by making use of the existing SOR mechanism to initiate network re-selection after the UEs have registered to the LHN. As the local service status may change during the service/event period and an interruption of service may be predicted by the LHN, the pre-configured search timer value may not be useful/optimal if a high number of users terminate their service before the expected event/service period expiry time.

Accordingly, in the second embodiment, once the LHN predicts a local service interruption via its service interruption prediction AF (SIP-AF), the LHN informs the home PLMN and requests an SOR update. When the SOR-AF receives this request via home PLMN Unified Data Management (UDM), it uses a back-off timer value assignment mechanism within the SOR-AF to manage the registration requests of its roaming UEs in the LHN. The back-off timer value procedure described for the first embodiment is, slightly modified, applicable also to the second embodiment, a difference being that instead of considering UEs in close proximity to the LHN, the home PLMN already has knowledge of the number of UEs that accessed the local services. Hence, the SOR-AF (i) chooses, e.g., randomly or based on UE's subscription plan, a group of UEs where the number of UEs in each group is within the home PLMN's capability to handle simultaneous registration requests; and (ii) assigns a value to the SOR timer value Tsor-cm from the range described for step S61 in FIG. 6. Such a SOR update may include the SOR connected mode control information (SOR-CMCI) to enable the home PLMN to control the timing of a UE in connected mode to move to idle mode in order to perform the SOR as described in 3GPP TS 23.122.

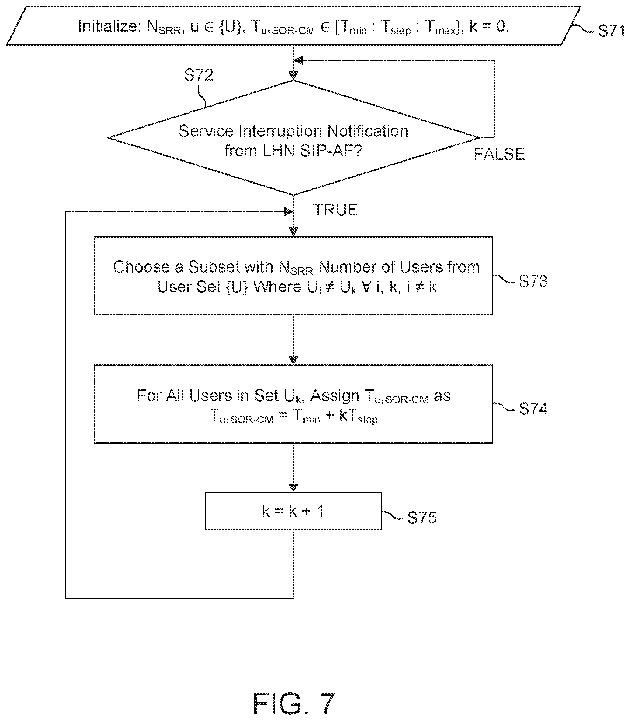

FIG. 7 is a signal flow diagram of a method of configuring SOR timer value Tsor-cm for users accessing LHN services according to an embodiment of the present principles. The method can be performed by the SOR-AF of the home PLMN.

In step S71, the algorithm is initialized with (i) the capabilities of the home PLMN to handle simultaneous registration requests at the same time (*N*_{SRR}); (ii) the index ***u*** which is an element of set of users U who are accessing the local service(s); (iii) the SOR timer value Tsor-cm that is in the range from ***T***ₘᵢₙ to ***T***ₘₐₓ by ***T***ₛₜₑₚ steps; and (iv) the batch of users index ***k*.**

In step S72, it is determined if there is a notification from LHN SIP-AF regarding a possible service interruption. In case there is, i.e., TRUE, then the SOR timer value Tsor-cm assignment process is started for the users who are accessing the LHN provided services and the method moves to step S73.

In step S73, the SOR-AF selects a set of users for the batch index ***k*** where the number of users in this set is *N*_{SRR}. The selected users will be omitted in the next run of this step, hence, the intersection of these sets is empty and they are all subset of the set U.

In step S74, the SOR timer value Tsor-cm for all users in the set Uk is configured based on the batch index ***k**,* step size ***T***ₛₜₑₚ and the minimum range value ***T***min, *Tᵤ,_{SOR-CM} = Tₘᵢₙ + kTₛₜₑₚ.*

In step S75, the batch index ***k*** is increased by 1.

Steps S72 to S75 are repeated until the SOR timer value Tsor-cm has been configured for all users in the set U.

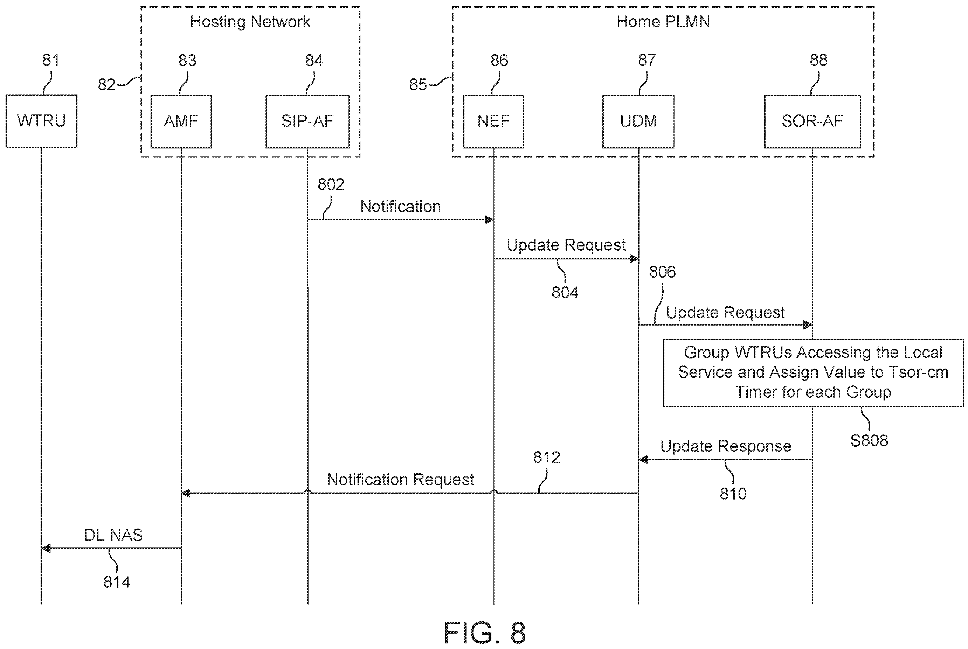

FIG. 8 is a signal flow diagram of a method of SOR-AF based network re-selection according to an embodiment of the present principles.

The SIP-AF 84 in a hosting network 82, LHN, exposes service interruption prediction information to the home PLMN of users who are accessing the local services in a notification 802 sent to the NEF 86 of the home PLMN 85.

After receiving the service interruption notification, the NEF 86 sends a SOR information update request 804 to the UDM 87 in the home PLMN 85.

The UDM 87 sends a SOR parameter update request 806 (e.g., Nudm_ParameterProvision_Update request) to the SOR-AF 88 in the home PLMN 85.

After reception of the request 806, the SOR-AF 88 performs S808 the method illustrated in FIG. 7 to assign SOR timer values Tsor-cm to the users of the PLMN who are accessing the local services provided by the LHN.

The SOR-AF 88 sends the assigned SOR timer value Tsor-cm values to the UDM 87 in a SOR parameter update response 810 (e.g., Nudm_ParameterProvision_Update response.

The UDM 87 sends a notification request 812 to the AMF 83 in the hosting network 82 to update the SOR information/parameters of the home PLMN subscribers, i.e., WTRUs 81, who are currently accessing the local services.

The AMF 83 transmits the updated SOR parameter to the home PLMN subscribers (e.g., WTRUs 81) in a DL NAS message 814.

Re-selection from a local hosting network to Home PLMN via Preferred PLMNs

In at least one embodiment it is assumed that the Home PLMN has a list of equivalent PLMNs in the location served by the local hosting network (LHN), which may be referred to collectively as "Preferred PLMNs for reselection from hosting network". These "Preferred PLMNs for reselection from hosting network" have coverage (e.g., network availability, i.e., radio presence, to serve UEs) and provision for admission control, i.e., they could accept users from the home PLMN, for example taking into consideration the ongoing local load on the network, number of users being served by the LHN which might trigger reselection back to the PLMN and other agreements in place.

Before or during the registration with the local hosting network, the Home PLMN may share the list of "Preferred PLMNs for reselection from hosting network" that may be used by the UE to transition back from the hosting network toward the Home PLMN. The list of "Preferred PLMNs for reselection from hosting network" could ensure that home PLMN is able to steer the UEs coming out of the hosting network towards these equivalent PLMNs in order to spread the signaling overload, rather than transitioning all UEs back to the Home PLMN at essentially the same time.

UE's that have received the "Preferred PLMNs for reselection from hosting network" may, while transitioning out of the local hosting network, base the PLMN selection on the received list, for example on a priority set by the received list.

Once UE's have successfully registered on (i.e., registered to) an equivalent PLMN as per the provided list "Preferred PLMNs for reselection from hosting network", normal cell selection and reselection mechanism may be used to transition back to the HPLMN.

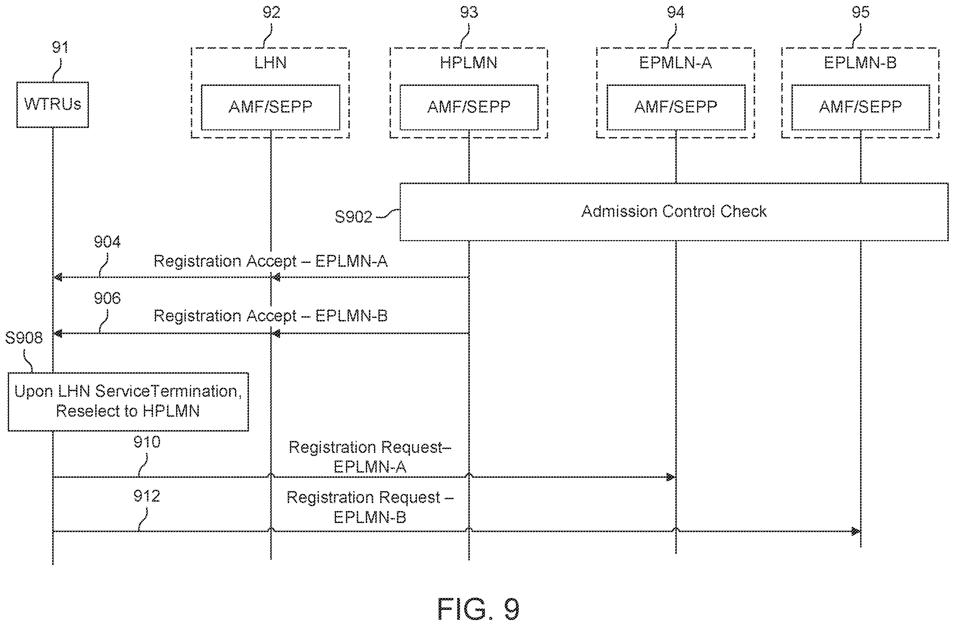

FIG. 9 is a signal flow diagram of a method of network re-selection according to an embodiment of the present principles.

HPLMN (Home PLMN) 93 has LHN 92 as Hosting Network and two equivalent (H)PLMNs - Equivalent PLMN (EPLMN) A (EPLMN-A) 94 and EPLMN-B 95. The EPLMNs have at least partly the same coverage area. Notably, they may cover at least part of the coverage area of the LHN 92.

WTRUs 91 camped on (i.e., locked onto a cell frequency and associated with a base station of) the LHN 92 receive the list of preferred networks for making the transition out of the hosting network 92 (e.g., via NAS signaling, SOR, UE Configuration Update Command (UCU) procedure (e.g., as defined in TS 24.501 - 5.4.4 Generic UE configuration update procedure) / UE Parameters Update (UPU) procedure (e.g., via UDM control plane procedures as defined in clause 4.20 of TS 23.502), etc.). The networks 92-95 may include an AMF/Security Edge Protection Proxy (SEPP).

A first set of UEs (e.g., WTRUs) are provided with a list of PLMNs including, by priority, EPLMN-A, HPLMN.

A second set of UEs (e.g., WTRUs) are provided with a list of PLMNs including, by priority, EPLMN-B, HPLMN.

A third set of UEs (WTRUs) are provided with a list of PLMNs including only HPLMN.

This way HPLMN 93 is able to steer the WTRUs 91 transitioning back from the hosting network 92 via EPLMN-A 94 and EPLMN-B 95, and thus mitigate or avoid the signaling overload which could have been caused by a large number of UEs attempting to re-select the Home PLMN 93 at the same time, triggered by terminated venue/event-specific temporary local services offered by the LHN 92.

"UEs" or "WTRUs" in FIG. 9 represents a set of UEs or WTRUs with HPLMN 93 as their home PLMN and currently in the area served by local hosting network (LHN) 92.

In step S902, Home PLMN 93 checks with equivalent PLMNs 94, 95 on the admission control, i.e., if these equivalent PLMNs 94, 95 serving the local hosting network (LHN) 92 are available and could take on UEs from the home PLMN, taking into consideration, for example, local network load/congestion, number of UEs which are being served by the LHN 92 and are expected to return at the end of services being offered by the LHN 92 etc. Briefly stated, the Home PLMN 93 determines to which the equivalent PLMNs 94, 95 WTRUs 91 can be directed, and possibly also how many UEs can be directed to each equivalent PLMN. This can result in the list "Preferred PLMNs for reselection from hosting network" to be shared with the UEs being served by the Local Hosting Network (LHN) 92.

During a Registration procedure with the local hosting network (LHN) 92 or with the HPLMN 93, the HPLMN 93 may share the list "Preferred PLMNs for reselection from hosting network" to be used for re-selection from the hosting network 92. After termination of the registration procedure, the same information can be delivered to the UEs, e.g., via UE configuration update command procedure or via SOR. Alternatively, the Home PLMN 93 may share the information on the preferred PLMNs for re-selection to the HPLMN 93 directly with the hosting network 93, and the hosting network (LHN) 92 may deliver the information via Registration Accept and/or UCU procedure. FIG. 9 illustrates the latter possibility, UCU procedure (as already indicated), and also shows that a first set of UEs is provided with a list 904 having EPLMN-A 94 prioritized, while a second set of UEs is provided with a list 906 having EPLMN-B 95 prioritized.

Upon termination of temporary services offered by the local hosting network (LHN) 92, WTRUs 91 may typically attempt to return, in step S908, to their HPLMN 93 to regain services. It is noted that different UEs may have different Home PLMNs. According to the present embodiment, UEs use the list "Preferred PLMNs for reselection from hosting network" for re-selection to the HPLMN 93, i.e., based on received list, UEs try to reselect an equivalent home PLMN, e.g., EPLMN-A 94 or EPLMN-B 95, instead of trying to camp back on the HPLMN 93.

A set of UEs would trigger registration attempt to specific equivalent PLMNs as per the received "Preferred PLMNs for reselection from hosting network" list, e.g., a set of UEs will attempt to register with EPLMN-A 94 by sending it Registration requests 910 (i.e., a UE will typically send one Registration request) and another set of UEs will attempt registration with EPLMN-B 95 by sending it a Registration request 912. Once registered with the equivalent PLMN (EPLMN-A / EPLMN-B), conventional cell selection and re-selection may be used to transition the WTRUs 91 back to the HPLMN 93.

In other words, network node in a home network for a plurality of UEs sends a first message intended for a first group of WTRUs being a first subset of the plurality of WTRUs, the first message comprising information indicating a first equivalent home network for the first group to connect to upon service termination in a hosting network to which the first group is connected; and sends a second message intended for a second group of WTRUs being a second subset of the plurality of WTRUs, the second message comprising information indicating a second equivalent home network for the second group to connect to upon service termination in the hosting network to which also the second group is connected.

An embodiment provides NAS level congestion control for a specific group of UEs. In this embodiment, the specific group of UEs represents the UEs that has accessed localized services provided by a LHN.

To this end, the network can make use of a new information element, for example named "hosting network access," in the deregistration request message to indicate that the deregistration request message is to enable the UE to access to the hosting network.

More specifically, when the UE-initiated deregistration request message is sent from UE to its HPLMN in order to access to local services provided by a LHN, the UE indicates in the deregistration message that the deregistration request is to access to local services provided by a LHN. When the network-initiated deregistration request message sent from network to the UE in order to enable the UE to register with a LHN to access to local services, the network indicates in the deregistration message that the deregistration request is to enable UE to register with a LHN to access to local services.

In an alternative, the "5GS local network access indication" IE, already described, can be used by the UE (for UE-initiated deregistration) or the network (for the network-initiated deregistration) to indicate that the deregistration process is triggered to enable the UE access to local services provided by a LHN.

The embodiment is also applicable to the cases where the UE or the network does not need to send a deregistration request message to enable the UE to access to LHN, provided that a network exposure framework from the LHN to the home PLMN exists to provide information on UEs that has requested access (or accessed) to the LHN.

The network (or an AF) can associate the UE(s) with an Internal-Group Identifier specific to the LHN. The UEs to be associated can be determined based on information that the deregistration process is intended to enable the UE to access to local services provided by the LHN, or based on information, provided by a network exposure framework from the LHN, on UEs that have requested access to or have accessed the LHN.

Then, the network (e.g., AMF or SMF) can use this Internal-Group Identifier to apply UE group-specific NAS level congestion control to manage the return of UEs from the LHN to their HPLMN. As already described, this can be done by spreading the registration attempts over time and by limiting the number of UEs attempting to register (at least essentially) simultaneously when the UEs accessed to the local service(s) provided by the LHN are returning to their home network.

In case NWDAF is deployed, the network (AMF or SMF) may make use of the existing analytics provided by NWDAF as noted in 3GPP TS 23.288 "Architecture enhancements for 5G System (5GS) to support network data analytics services (Release 17)" to determine a back-off timer value to provide to these UEs. The network may also make use of a new analytics function, for example named "LHN performance," that provides statistics or predictions on user plane performance for a specific LHN or local service(s) provided by a LHN to determine a back-off timer value provided to UEs.

### Standard implications

The present principles can be included in 3GPP standards, e.g., 3GPP TS 24.501, by modifying the current standard document as will be described.

3GPP TS 24.501 - Clause 9.11.3.7 - Table 9.11.3.7.1: 5GS registration type information element could be modified as follows to include the "hosting network-specific re-registration" registration type, where XXX stands for a currently unused value:

| | | | |
|---|---|---|---|
| 5GS registration type value (octet 1, bits 1 to 3) | | | |
| Bits | | | |
| **3** | **2** | **1** | |
| 0 | 0 | 1 | initial registration |
| 0 | 1 | 0 | mobility registration updating |
| 0 | 1 | 1 | periodic registration updating |
| 1 | 0 | 0 | emergency registration |
| X | X | X | hosting network-specific re-registration |
| 1 | 1 | 1 | reserved |
| All other values are unused and shall be interpreted as "initial registration", if received by the network. | | | |
| Follow-on request bit (FOR) (octet 1, bit 4) | | | |
| Bit | | | |
| **4** | | | |
| 0 | | | No follow-on request pending |
| 1 | | | Follow-on request pending |

The hosting network-specific re-registration information may also be provided by 5GS update type IE that is used to allow the UE to provide additional information to the network when performing a registration procedure. 3GPP TS 24.501 - Clause 9.11.3.9A - Table 9.11.3.9A.1: 5GS update type information element could be modified as indicated by the mark-ups to include the "hosting network-specific re-registration" registration type:

| | | |
|---|---|---|
| SMS over NAS transport requested (SMS requested) (octet 3, bit 1) | | |
| Bit | | |
| **1** | | |
| 0 | | SMS over NAS not supported |
| 1 | | SMS over NAS supported |
| NG-RAN Radio Capability Update (NG-RAN-RCU) (octet 3, bit 2) | | |
| Bit | | |
| **2** | | |
| 0 | | UE radio capability update not needed |
| 1 | | UE radio capability update needed |
| For a list of RATs for which a radio capability update can be triggered by means of this indication see subclause 5.5.1.3.2, case n). | | |
| 5GS Preferred CloT network behaviour (5GS PNB-CloT) (octet 3, bits 3 and 4) | | |
| Bits | | |
| **4** | **3** | |
| 0 | 0 | no additional information |
| 0 | 1 | control plane CloT 5GS optimization |
| 1 | 0 | user plane CloT 5GS optimization |
| 1 | 1 | reserved |
| EPS Preferred CloT network behaviour (EPS-PNB-CloT) (octet 3, bits 5 and 6) | | |
| Bits | | |
| **6** | **5** | |
| 0 | 0 | no additional information |
| 0 | 1 | control plane CloT EPS optimization |
| 1 | 0 | user plane CloT EPS optimization |
| 1 | 1 | reserved |
| Re-registration request sent by UE that has temporarily accessed to a hosting network for a localized service | | |
| Bit | | |
| **7** | | |
| 0 | | no additional information |
| 1 | | re-registration from hosting network |
| Bit 8 of octet 3 is spare and shall be coded as zero. | | |

The hosting network-specific re-registration information may also be provided by a new IE in the registration request message. 3GPP TS 24.501 - Clause 8.2.6.1 - Table 8.2.6.1.1: REGISTRATION REQUEST message content could be modified to add a line with the following information:
- IEI: XX
- Information Element: 5GS local network access indication
- Type/Reference: Local network access indication 8.2.6.X
- Presence: X
- Format: X
- Length: X
where X:s for IEI and Type/Reference indicate values not used for other items of the same type in the document and X:s for presence, format and length represent any desired, possible value.

In addition, a new paragraph could be added: "8.2.6.X 5GS local network access indication: This IE shall be included if the UE has accessed to a local hosting network."

3GPP TS 24.501 - Clause 8.2.9.1 - Table 8.2.9.1.1: REGISTRATION REJECT message content could be modified to add a line with the following information:
- IEI: XX
- Information Element: TXXXX value
- Type/Reference: Re-registration from hosting network time X.X.X
- Presence: X
- Format: X
- Length: X
where X:s for IEI and Type/Reference indicate values not used for other items of the same type in the document and X:s for presence, format and length represent any desired, possible value.

In addition, a new paragraph could be added: "8.2.9.X TXXXX: The AMF may include this IE when the REGISTRATION REJECT message includes 5GMM cause #XX (congestion-re-registration from hosting network)."

3GPP TS 24.501 - Clause 9.11.3.2 - Table 9.11.3.2.1: 5GMM cause information element could be modified to add a line with a new 8-bit value, "Congestion-re-registration from hosting network".

3GPP TS 24.501 - Table 8.2.7.1.1: REGISTRATION ACCEPT message content could be modified to add a new Information Element for example with the following information: Information Element: "Preferred PLMNs for reselection from hosting network"; Type/Reference: PLMN list 9.11.3.45; Presence: O; Format: TLV; Length: 5-47.

An AMF may include this IE in the Registration accept message to provide a UE with a list of preferred PLMNs to be used for reselection back to the HPLMN from hosting network, as already described.

3GPP TS 24.501 - Table 8.2.19.1.1: CONFIGURATION UPDATE COMMAND message content could be modified to add a new Information Element for example with the following information: Information Element: "Preferred PLMNs for reselection from hosting network"; Type/Reference: PLMN list 9.11.3.45; Presence: O; Format: TLV; Length: 5-47.

An AMF may include this IE in a CONFIGURATION UPDATE COMMAND message to provide a UE with a list of preferred PLMNs to be used for reselection back to the HPLMN from hosting network.

### Conclusion

In the methods described in the present disclosure, it is understood that timers and timer values represent parameters used to determine the amount of time elapsed. As such, timer values are also called time values. The amount of time elapsed may be in units of milliseconds, seconds, minutes, frames, TTIs, subframes, or symbols.

Although features and elements are provided above in particular combinations, one of ordinary skill in the art will appreciate that each feature or element can be used alone or in any combination with the other features and elements. Many modifications and variations may be made without departing from its scope, as will be apparent to those skilled in the art. No element, act, or instruction used in the description of the present application should be construed as critical or essential to the invention unless explicitly provided as such. The present disclosure is to be limited only by the terms of the appended claims.

The foregoing embodiments are discussed, for simplicity, with regard to the terminology and structure of infrared capable devices, i.e., infrared emitters and receivers. However, the embodiments discussed are not limited to these systems but may be applied to other systems that use other forms of electromagnetic waves or non-electromagnetic waves such as acoustic waves.

It is also to be understood that the terminology used herein is for the purpose of describing particular embodiments only, and is not intended to be limiting. As used herein, the term "video" or the term "imagery" may mean any of a snapshot, single image and/or multiple images displayed over a time basis. As another example, when referred to herein, the terms "user equipment" and its abbreviation "UE", the term "remote" and/or the terms "head mounted display" or its abbreviation "HMD" may mean or include (i) a wireless transmit and/or receive unit (WTRU); (ii) any of a number of embodiments of a WTRU; (iii) a wireless-capable and/or wired-capable (e.g., tetherable) device configured with, inter alia, some or all structures and functionality of a WTRU; (iii) a wireless-capable and/or wired-capable device configured with less than all structures and functionality of a WTRU; or (iv) the like. Details of an example WTRU, which may be representative of any WTRU recited herein, are provided herein with respect to FIGs. 1A-1D. As another example, various disclosed embodiments herein *supra* and *infra* are described as utilizing a head mounted display. Those skilled in the art will recognize that a device other than the head mounted display may be utilized and some or all of the disclosure and various disclosed embodiments can be modified accordingly without undue experimentation. Examples of such other device may include a drone or other device configured to stream information for providing the adapted reality experience.

In addition, the methods provided herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

The embodiments provided herein include handheld devices, which may include or be utilized with any appropriate voltage source, such as a battery and the like, providing any appropriate voltage. In the process flows of the present disclosure, the operations may be performed in different orders or at different number of times. Certain operations may also be left out of the process flow, or other operations may be added to the process flow.

Moreover, in the embodiments provided above, processing platforms, computing systems, controllers, and other devices that include processors are noted. These devices may include at least one Central Processing Unit ("CPU") and memory. In accordance with the practices of persons skilled in the art of computer programming, reference to acts and symbolic representations of operations or instructions may be performed by the various CPUs and memories. Such acts and operations or instructions may be referred to as being "executed," "computer executed" or "CPU executed."

One of ordinary skill in the art will appreciate that the acts and symbolically represented operations or instructions include the manipulation of electrical signals by the CPU. An electrical system represents data bits that can cause a resulting transformation or reduction of the electrical signals and the maintenance of data bits at memory locations in a memory system to thereby reconfigure or otherwise alter the CPU's operation, as well as other processing of signals. The memory locations where data bits are maintained are physical locations that have particular electrical, magnetic, optical, or organic properties corresponding to or representative of the data bits. It should be understood that the embodiments are not limited to the above-mentioned platforms or CPUs and that other platforms and CPUs may support the provided methods.

The data bits may also be maintained on a computer readable medium including magnetic disks, optical disks, and any other volatile (e.g., Random Access Memory (RAM)) or non-volatile (e.g., Read-Only Memory (ROM)) mass storage system readable by the CPU. The computer readable medium may include cooperating or interconnected computer readable medium, which exist exclusively on the processing system or are distributed among multiple interconnected processing systems that may be local or remote to the processing system. It should be understood that the embodiments are not limited to the above-mentioned memories and that other platforms and memories may support the provided methods.

In an illustrative embodiment, any of the operations, processes, etc. described herein may be implemented as computer-readable instructions stored on a computer-readable medium. The computer-readable instructions may be executed by a processor of a mobile unit, a network element, and/or any other computing device.

There is little distinction left between hardware and software implementations of aspects of systems. The use of hardware or software is generally (but not always, in that in certain contexts the choice between hardware and software may become significant) a design choice representing cost versus efficiency tradeoffs. There may be various vehicles by which processes and/or systems and/or other technologies described herein may be effected (e.g., hardware, software, and/or firmware), and the preferred vehicle may vary with the context in which the processes and/or systems and/or other technologies are deployed. For example, if an implementer determines that speed and accuracy are paramount, the implementer may opt for a mainly hardware and/or firmware vehicle. If flexibility is paramount, the implementer may opt for a mainly software implementation. Alternatively, the implementer may opt for some combination of hardware, software, and/or firmware.

The foregoing detailed description has set forth various embodiments of the devices and/or processes via the use of block diagrams, flowcharts, and/or examples. Insofar as such block diagrams, flowcharts, and/or examples include one or more functions and/or operations, it will be understood by those within the art that each function and/or operation within such block diagrams, flowcharts, or examples may be implemented, individually and/or collectively, by a wide range of hardware, software, firmware, or virtually any combination thereof. In an embodiment, several portions of the subject matter described herein may be implemented via Application Specific Integrated Circuits (ASICs), Field Programmable Gate Arrays (FPGAs), digital signal processors (DSPs), and/or other integrated formats. However, those skilled in the art will recognize that some aspects of the embodiments disclosed herein, in whole or in part, may be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure. In addition, those skilled in the art will appreciate that the mechanisms of the subject matter described herein may be distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a CD, a DVD, a digital tape, a computer memory, etc., and a transmission type medium such as a digital and/or an analog communication medium (e.g., a fiber optic cable, a waveguide, a wired communications link, a wireless communication link, etc.).

Those skilled in the art will recognize that it is common within the art to describe devices and/or processes in the fashion set forth herein, and thereafter use engineering practices to integrate such described devices and/or processes into data processing systems. That is, at least a portion of the devices and/or processes described herein may be integrated into a data processing system via a reasonable amount of experimentation. Those having skill in the art will recognize that a typical data processing system may generally include one or more of a system unit housing, a video display device, a memory such as volatile and non-volatile memory, processors such as microprocessors and digital signal processors, computational entities such as operating systems, drivers, graphical user interfaces, and applications programs, one or more interaction devices, such as a touch pad or screen, and/or control systems including feedback loops and control motors (e.g., feedback for sensing position and/or velocity, control motors for moving and/or adjusting components and/or quantities). A typical data processing system may be implemented utilizing any suitable commercially available components, such as those typically found in data computing/communication and/or network computing/communication systems.

The herein described subject matter sometimes illustrates different components included within, or connected with, different other components. It is to be understood that such depicted architectures are merely examples, and that in fact many other architectures may be implemented which achieve the same functionality. In a conceptual sense, any arrangement of components to achieve the same functionality is effectively "associated" such that the desired functionality may be achieved. Hence, any two components herein combined to achieve a particular functionality may be seen as "associated with" each other such that the desired functionality is achieved, irrespective of architectures or intermedial components. Likewise, any two components so associated may also be viewed as being "operably connected", or "operably coupled", to each other to achieve the desired functionality, and any two components capable of being so associated may also be viewed as being "operably couplable" to each other to achieve the desired functionality. Specific examples of operably couplable include but are not limited to physically mateable and/or physically interacting components and/or wirelessly interactable and/or wirelessly interacting components and/or logically interacting and/or logically interactable components.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, where only one item is intended, the term "single" or similar language may be used. As an aid to understanding, the following appended claims and/or the descriptions herein may include usage of the introductory phrases "at least one" and "one or more" to introduce claim recitations. However, the use of such phrases should not be construed to imply that the introduction of a claim recitation by the indefinite articles "a" or "an" limits any particular claim including such introduced claim recitation to embodiments including only one such recitation, even when the same claim includes the introductory phrases "one or more" or "at least one" and indefinite articles such as "a" or "an" (e.g., "a" and/or "an" should be interpreted to mean "at least one" or "one or more"). The same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B." Further, the terms "any of" followed by a listing of a plurality of items and/or a plurality of categories of items, as used herein, are intended to include "any of," "any combination of," "any multiple of," and/or "any combination of multiples of" the items and/or the categories of items, individually or in conjunction with other items and/or other categories of items. Moreover, as used herein, the term "set" is intended to include any number of items, including zero. Additionally, as used herein, the term "number" is intended to include any number, including zero. And the term "multiple", as used herein, is intended to be synonymous with "a plurality".

In addition, where features or aspects of the disclosure are described in terms of Markush groups, those skilled in the art will recognize that the disclosure is also thereby described in terms of any individual member or subgroup of members of the Markush group.

As will be understood by one skilled in the art, for any and all purposes, such as in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, etc. As a non-limiting example, each range discussed herein may be readily broken down into a lower third, middle third and upper third, etc. As will also be understood by one skilled in the art all language such as "up to," "at least," "greater than," "less than," and the like includes the number recited and refers to ranges which can be subsequently broken down into subranges as discussed above. Finally, as will be understood by one skilled in the art, a range includes each individual member. Thus, for example, a group having 1-3 cells refers to groups having 1, 2, or 3 cells. Similarly, a group having 1-5 cells refers to groups having 1, 2, 3, 4, or 5 cells, and so forth.

## Claims

1. A method performed by a network node (36) in a home network for a Wireless Transmit/Receive Unit (32), WTRU, comprising:
receiving from the WTRU a registration request message (31) comprising information indicating that the WTRU requests re-registration to the home network; and
sending to the WTRU the registration reject message (63) comprising information indicating a rejection cause and a time value:
the method being **characterised in that** it further comprises determining (S61) a range of time values comprising a maximum value, wherein the maximum value is calculated from a number of subscribers to the home network in proximity to a hosting network and a capability of the home network to handle simultaneous registration requests; and
**in that** the time value is selected in the range of time values.

2. The method of claim 1, wherein the rejection cause indicates that the rejection message is related to hosting network-specific congestion.

3. The method of claim 1, wherein the registration request message further comprises information indicating that the WTRU is temporarily connected to a hosting network.

4. The method of claim 1, wherein the range of time values further comprises a minimum value.

5. A network node (36), comprising:
memory storing processor-executable instructions; and
a processor configured to execute the instructions to:
receive from a Wireless Transmit/Receive Unit (32), WTRU, a registration request message comprising information indicating that the WTRU requests re-registration to a home network in which the network node is located; and
send to the WTRU the registration reject message comprising information indicating a rejection cause and a time value;
the network node being **characterised in that** the processor is further configured to:
determine a range of time values comprising a maximum value, wherein the maximum value is calculated from a number of subscribers to the home network in proximity to a hosting network and a capability of the home network to handle simultaneous registration requests; and
select the time value in the range of time values.

6. The network node of claim 5, wherein the rejection cause indicates that the rejection message is related to hosting network-specific congestion.

7. The network node of claim 5, wherein the registration request message further comprises information indicating that the WTRU is temporarily connected to a hosting network.

8. The network node of claim 5, wherein the range of time values further comprises a minimum value.

9. A method performed by a network node (36) in a home network for a plurality of Wireless Transmit/Receive Units (32), WTRUs, the method being **characterised in that** it comprises:
determining (S53) a number of subsets of WTRUs from the plurality of WTRUs, wherein each subset comprises no more than a number of simultaneous registration requests the home network can handle;
determining (S58) a time value for each subset, the time value calculated from a minimum time value, a step value and an integer, wherein the integer is different for each subset; and
transmitting the determined time values to the WTRUs.

10. The method of claim 9, further comprising receiving information indicating the WTRUs from which the subsets are to be determined.

11. A network node (36), comprising:
memory storing processor-executable instructions; and
a processor;
the network node being **characterised in that** the processor is configured to execute the instructions to:
determine a number of subsets of Wireless Transmit/Receive Units (S32), WTRUs, from the plurality of WTRUs, wherein each subset comprises no more than a number of simultaneous registration requests a home network in which the network node is located can handle;
determine a time value for each subset, the time value calculated from a minimum time value, a step value and an integer, wherein the integer is different for each subset; and
transmitting the determined time values to the WTRUs.

12. The network node of claim 11, wherein the processor is further configured to execute the instructions to receive information indicating the WTRUs from which the subsets are to be determined.

## Patentansprüche

1. Verfahren, das durch einen Netzknoten (36) in einem Heimnetz für eine drahtlose Sende/Empfangs-Einheit (32), WTRU, ausgeführt wird, wobei das Verfahren umfasst:
Empfangen einer Registrierungsanforderungsnachricht (31), die Informationen umfasst, die angeben, dass die WTRU die Neuregistrierung bei dem Heimnetz anfordert, von der WTRU; und
Senden der Registrierungsablehnungsnachricht (63), die Informationen umfasst, die eine Ablehnungsursache und einen Zeitwert angeben, an die WTRU;
wobei das Verfahren **dadurch gekennzeichnet ist, dass** es ferner das Bestimmen (S61) eines Bereichs von Zeitwerten, der einen Maximalwert umfassen, umfasst, wobei der Maximalwert aus einer Anzahl von Abonnenten bei dem Heimnetz in der Nähe eines Hosting-Netzes und einer Fähigkeit des Heimnetzes, gleichzeitige Registrierungsanforderungen zu behandeln, berechnet wird; und
dass der Zeitwert in dem Bereich von Zeitwerten ausgewählt wird.

2. Verfahren nach Anspruch 1, wobei die Ablehnungsursache angibt, dass die Ablehnungsnachricht mit einer Hosting-Netz-spezifischen Überlastung in Beziehung steht.

3. Verfahren nach Anspruch 1, wobei die Registrierungsanforderungsnachricht ferner Informationen umfasst, die angeben, dass die WTRU vorübergehend mit einem Hosting-Netz verbunden ist.

4. Verfahren nach Anspruch 1, wobei der Bereich von Zeitwerten ferner einen Minimalwert umfasst.

5. Netzknoten (36), der umfasst:
Speicher, der durch einen Prozessor ausführbare Anweisungen speichert; und
einen Prozessor, der dafür konfiguriert ist, die Anweisungen auszuführen zum:
Empfangen einer Registrierungsanforderungsnachricht, die Informationen umfasst, die angeben, dass die WTRU die Neuregistrierung bei einem Heimnetz, in dem sich der Netzknoten befindet, anfordert, von einer drahtlosen Sende/Empfangs-Einheit (32), WTRU; und
Senden der Registrierungsablehnungsnachricht, die Informationen umfasst, die eine Ablehnungsursache und einen Zeitwert angeben, an die WTRU;
wobei der Netzknoten **dadurch gekennzeichnet ist, dass** der Prozessor ferner konfiguriert ist zum:
Bestimmen eines Bereichs von Zeitwerten, der einen Maximalwert umfassen, wobei der Maximalwert aus einer Anzahl von Abonnenten bei dem Heimnetz in der Nähe eines Hosting-Netzes und einer Fähigkeit des Heimnetzes, gleichzeitige Registrierungsanforderungen zu behandeln, berechnet wird; und
Auswählen des Zeitwerts in dem Bereich von Zeitwerten.

6. Netzknoten nach Anspruch 5, wobei die Ablehnungsursache angibt, dass die Ablehnungsnachricht mit einer Hosting-Netz-spezifischen Überlastung in Beziehung steht.

7. Netzknoten nach Anspruch 5, wobei die Registrierungsanforderungsnachricht ferner Informationen umfasst, die angeben, dass die WTRU vorübergehend mit einem Hosting-Netz verbunden ist.

8. Netzknoten nach Anspruch 5, wobei der Bereich von Zeitwerten ferner einen Minimalwert umfasst.

9. Verfahren, das durch einen Netzknoten (36) in einem Heimnetz für mehrere drahtlose Sende/EmpfangsEinheiten (32), WTRUs, ausgeführt wird, wobei das Verfahren **dadurch gekennzeichnet ist, dass** es umfasst:
Bestimmen (S53) einer Anzahl von Teilmengen von WTRUs aus den mehreren WTRUs, wobei jede Teilmenge nicht mehr WTRUs umfasst als eine Anzahl gleichzeitiger Registrierungsanforderungen, die das Heimnetz behandeln kann;
Bestimmen (S58) eines Zeitwerts für jede Teilmenge, wobei der Zeitwert aus einem Minimalzeitwert, einem Schrittwert und einer ganzen Zahl berechnet wird,
wobei die ganze Zahl für jede Teilmenge anders ist; und
Senden der bestimmten Zeitwerte an die WTRUs.

10. Verfahren nach Anspruch 9, das ferner das Empfangen von Informationen, die die WTRUs angeben, aus denen die Teilmengen bestimmt werden sollen, umfasst.

11. Netzknoten (36), der umfasst:
Speicher, der durch einen Prozessor ausführbare Anweisungen speichert; und
einen Prozessor;
wobei der Netzknoten **dadurch gekennzeichnet ist, dass** der Prozessor dafür konfiguriert ist, die Anweisungen auszuführen zum:
Bestimmen einer Anzahl von Teilmengen drahtloser Sende/Empfangs-Einheiten (32), WTRUs, aus einer Mehrzahl von WTRUs, wobei jede Teilmenge eine Anzahl von WTRUs umfasst, die nicht größer ist als die Anzahl gleichzeitiger Registrierungsanforderungen, die das Heimnetz, in der sich der Netzknoten befindet, behandeln kann;
Bestimmen eines Zeitwerts für jede Teilmenge, wobei der Zeitwert aus einem Minimalzeitwert, einem Schrittwert und einer ganzen Zahl berechnet wird, wobei die ganze Zahl für jede Teilmenge anders ist; und
Senden der bestimmten Zeitwerte an die WTRUs.

12. Netzknoten nach Anspruch 11, wobei der Prozessor ferner dafür konfiguriert ist, die Anweisungen auszuführen, um Informationen zu empfangen, die die WTRUs angeben, aus denen die Teilmengen bestimmt werden sollen.

## Revendications

1. Procédé mis en œuvre par un nœud de réseau (36) au sein d'un réseau domestique pour une unité d'émission/de réception sans fil (32), WTRU, comprenant :
la réception, en provenance de la WTRU, d'un message de demande d'enregistrement (31) comprenant des informations indiquant que la WTRU demande un réenregistrement auprès du réseau domestique ; et
l'envoi à la WTRU du message de rejet d'enregistrement (63) comprenant des informations indiquant un motif de rejet et une valeur temporelle ;
le procédé étant **caractérisé en ce qu'**il comprend en outre la détermination (S61) d'une plage de valeurs temporelles comprenant une valeur maximale, où la valeur maximale est calculée à partir d'un nombre d'abonnés au réseau domestique situés à proximité d'un réseau hôte et d'une capacité du réseau domestique à traiter des demandes d'enregistrement simultanées ; et
**en ce que** la valeur temporelle est sélectionnée dans la plage de valeurs temporelles.

2. Procédé selon la revendication 1, dans lequel le motif de rejet indique que le message de rejet est lié à une congestion spécifique au réseau d'hébergement.

3. Procédé selon la revendication 1, dans lequel le message de demande d'enregistrement comprend en outre des informations indiquant que la WTRU est temporairement connectée à un réseau d'hébergement.

4. Procédé selon la revendication 1, dans lequel la plage de valeurs temporelles comprend en outre une valeur minimale.

5. Nœud de réseau (36), comprenant :
une mémoire stockant des instructions exécutables par un processeur ; et
un processeur configuré pour exécuter les instructions pour :
recevoir, en provenance d'une unité d'émission/de réception sans fil (32), WTRU, un message de demande d'enregistrement comprenant des informations indiquant que la WTRU demande un réenregistrement auprès d'un réseau domestique dans lequel se trouve le nœud de réseau ; et
envoyer à la WTRU le message de rejet d'enregistrement comprenant des informations indiquant un motif de rejet et une valeur temporelle ;
le nœud de réseau étant **caractérisé en ce que** le processeur est en outre configuré pour :
déterminer une plage de valeurs temporelles comprenant une valeur maximale, où la valeur maximale est calculée à partir d'un nombre d'abonnés au réseau domestique situés à proximité d'un réseau hôte et d'une capacité du réseau domestique à traiter des demandes d'enregistrement simultanées ; et
sélectionner la valeur temporelle dans la plage de valeurs temporelles.

6. Nœud de réseau selon la revendication 5, dans lequel le motif de rejet indique que le message de rejet est lié à une congestion spécifique au réseau d'hébergement.

7. Nœud de réseau selon la revendication 5, dans lequel le message de demande d'enregistrement comprend en outre des informations indiquant que la WTRU est temporairement connectée à un réseau d'hébergement.

8. Nœud de réseau selon la revendication 5, dans lequel la plage de valeurs temporelles comprend en outre une valeur minimale.

9. Procédé mis en œuvre par un nœud de réseau (36) au sein d'un réseau domestique pour une pluralité d'unités d'émission/de réception sans fil (32), WTRU, le procédé étant **caractérisé en ce qu'**il comprend :
la détermination (S53) d'un nombre de sous-ensembles de WTRU parmi la pluralité de WTRU, où chaque sous-ensemble ne comprend pas plus de demandes d'enregistrement simultanées que le réseau domestique ne peut en traiter ;
la détermination (S58) d'une valeur temporelle pour chaque sous-ensemble, la valeur temporelle étant calculée à partir d'une valeur temporelle minimale, d'une valeur de pas et d'un nombre entier, où le nombre entier est différent pour chaque sous-ensemble ; et
la transmission des valeurs temporelles déterminées aux WTRU.

10. Procédé selon la revendication 9, comprenant en outre la réception d'informations indiquant les WTRU à partir desquelles les sous-ensembles doivent être déterminés.

11. Nœud de réseau (36), comprenant :
une mémoire stockant des instructions exécutables par un processeur ; et
un processeur ;
le nœud de réseau étant **caractérisé en ce que** le processeur est en outre configuré pour exécuter les instructions pour :
déterminer un nombre de sous-ensembles d'unités d'émission/de réception sans fil (S32), WTRU, parmi la pluralité de WTRU, où chaque sous-ensemble ne comprend pas plus de demandes d'enregistrement simultanées qu'un réseau domestique dans lequel se trouve le nœud de réseau ne peut en traiter ;
déterminer une valeur temporelle pour chaque sous-ensemble, la valeur temporelle étant calculée à partir d'une valeur temporelle minimale, d'une valeur de pas et d'un nombre entier, où le nombre entier est différent pour chaque sous-ensemble ; et
transmettre les valeurs temporelles déterminées aux WTRU.

12. Nœud de réseau selon la revendication 11, dans lequel le processeur est en outre configuré pour exécuter les instructions pour recevoir des informations indiquant les WTRU à partir desquelles les sous-ensembles doivent être déterminés.
